(19) Europäisches Patentamt
European Patent Office
Office européen des brevets

(11) **EP 2 490 430 A2**

(12) **EUROPEAN PATENT APPLICATION**

(43) Date of publication:
**22.08.2012  Bulletin 2012/34**

(51) Int Cl.:
***H04M 11/06*** *(2006.01)*

(21) Application number: **12155772.2**

(22) Date of filing: **16.02.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.02.2011  CN 201110039311**

(71) Applicant: **Huawei Technologies Co., Ltd.
Longgang District, Shenzhen
Guangdong 518129 (CN)**

(72) Inventors:
• **Lv, Jie
  518129 Shenzhen (CN)**
• **Fang, Liming
  518129 Shenzhen (CN)**

(74) Representative: **Isarpatent
Patent- und Rechtsanwälte
Friedrichstrasse 31
80801 München (DE)**

(54) **Signal processing method, device, and system of bonded digital subscriber line channels**

(57)     In the field of communication, this application discloses a signal processing method, device, and system of bonded DSL channels, thereby reducing far-end crosstalk between bonded channels. A signal processing method of bonded DSL channels provided by the embodiment of the present invention includes: sending a pilot sequence to a receiving end through bonded channels; receiving, through the bonded channels, clipped error sample fragments returned by the receiving end, where the receiving end constructs a clipped error sample according to an error of a received signal and fragments the clipped error sample to acquire the clipped error sample fragments; aggregating the received clipped error sample fragments into a clipped error sample; and calculating a pre-encoding coefficient according to the pilot sequence and the aggregated clipped error sample, where the pre-encoding coefficient is used to perform pre-encoding processing on a signal before the signal is sent.

FIG. 7

EP 2 490 430 A2

## Description

## FIELD OF THE INVENTION

The present invention relates to the field of communications, and in particular, to a processing method, device and system for reducing crosstalk between bonded channels.

## BACKGROUND OF THE INVENTION

A Unshielded Twisted Pair (UTP) is usually used for Ethernet data transmission. UTP-based technologies for transmitting a signal include: ADSL (Asymmetric Digital Subscriber Line), VDSL (Very High Bit Rate Digital Subscriber Line), and HDSL (High bit Rate Digital Subscriber Line), which are collectively called xDSL technologies. Due to an effect caused by electromagnetic induction, far-end crosstalk may occur between multiple channels accessed by the xDSL. That is, after being attenuated by a circuit, a signal sent at a near end interferes with a signal in an adjacent channel at a far end. The far-end crosstalk may cause problems such as a reduced line rate, unsteady performance, and disconnection of a line.

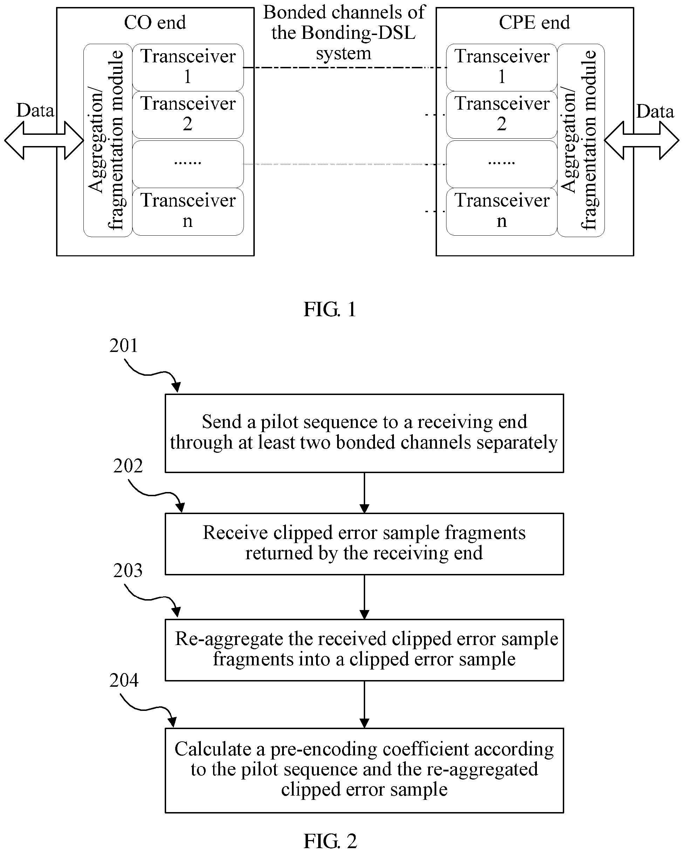

With the ever increasing requirements on subscriber bandwidth, a Bonding-DSL technology emerges. The technology bonds multiple DSL channels, and provides a data channel for a subscriber. When a CO (central office, central office) end sends data to a CPE (customer premises equipment, customer premises equipment) end, the data passing through an aggregation/fragmentation module at the CO end is fragmented to each CO end transceiver, and is sent by the transceiver to each CPE end transceiver through bonded channels. At the CPE end, received data fragments form complete data again through an aggregation/fragmentation module. Similarly, the CPE end also sends data to the CO end according to the above process. A data transmission system (Bonding-DSL system) using the Bonding-DSL technology is as shown in FIG. 1.

During the implementation of the Bonding-DSL system, it is found that when the CO end transmits data to the CPE end, bonded channels of the system also have a far-end crosstalk problem. How to reduce the far-end crosstalk between the bonded channels when the CO end in the Bonding-DSL system transmits data to the CPE end in the Bonding-DSL system is the problem to be solved by the present patent.

## SUMMARY OF THE INVENTION

Embodiments of the present invention provide a signal processing method, device, and system of bonded DSL channels, which may reduce far-end crosstalk in a system where channels are bonded.

In order to achieve the above objective, the embodiments of the present invention adopt the following technical solutions.

A signal processing method of bonded DSL channels includes:

sending a pilot sequence to a receiving end through at least two bonded channels separately;
receiving, through at least two channels of the bonded channels, clipped error sample fragments returned by the receiving end separately, in which the receiving end measures an error of a received signal, constructs a clipped error sample, and fragments the clipped error sample to acquire the clipped error sample fragments;
re-aggregating received clipped error sample fragments into a clipped error sample; and
calculating a pre-encoding coefficient according to the pilot sequence and the re-aggregated clipped error sample, in which the pre-encoding coefficient is used to perform pre-encoding processing on a signal before the signal is sent to the at least two channels.

A signal processing device of bonded DSL channels includes:

a sending unit, configured to send a pilot sequence to a receiving end through at least two bonded channels separately;
a receiving unit, configured to receive, through at least two channels of the bonded channels, clipped error sample fragments returned by the receiving end separately, in which the receiving end measures an error of a received signal, constructs a clipped error sample, and fragments the clipped error sample to acquire the clipped error sample fragments;
an aggregation unit, re-aggregating the received clipped error sample fragments into a clipped error sample; and
a pre-encoding calculating unit, configured to calculate a pre-encoding coefficient according to the pilot sequence and the re-aggregated clipped error sample, in which the pre-encoding coefficient is used to perform pre-encoding processing on a signal before the signal is sent to the at least two channels.

A signal processing system of bonded DSL channels includes:

a CO, configured to send a pilot sequence to a CPE through at least two bonded channels separately; and
the CPE, configured to construct a clipped error sample according to an error of a signal received from the at least two channels, fragment the clipped error sample to acquire the clipped error sample fragments, and return the clipped error sample fragments to the CO through the at least two channels.

The CO is further configured to receive, through at least two channels of the bonded channels, the clipped error sample fragments returned by the CPE separately, and re-aggregate the clipped error sample fragments into a clipped error sample.

The CO is further configured to calculate a pre-encoding coefficient according to the pilot sequence and the re-aggregated clipped error sample, in which the pre-encoding coefficient is used to perform pre-encoding processing on a signal before the signal is sent to the at least two channels.

In the signal processing method, device, and system of bonded DSL channels provided by the embodiment of the present invention, the pre-encoding coefficient is introduced into the sending end of a Bonding-DSL system. When a CO end in the system transmits data to a CPE end in the system, the far-end crosstalk may be reduced, which thereby ensures communication steadiness of the bonded channels.

**BRIEF DESCRIPTION OF THE DRAWINGS**

FIG. 1 is a block diagram of a Bonding-DSL system in the prior art;

FIG. 2 is a flow chart of a processing method of bonded DSL channels in Embodiment 1 of the present invention;

FIG. 3 is a block diagram of a processing device of bonded DSL channels in Embodiment 1 of the present invention;

FIG. 4 is a flow chart of a processing method of bonded DSL channels in Embodiment 2 of the present invention;

FIG. 5 is a block diagram of a processing device of bonded DSL channels in Embodiment 3 of the present invention;

FIG. 6 is a block diagram of a processing system of bonded DSL channels in Embodiment 4 of the present invention;

FIG. 7 is a block diagram of a specific implementation of the processing system of bonded DSL channels in Embodiment 4 of the present invention;

FIG. 8 is a block diagram of a Bonding-DSL system additionally equipped with a VCE and a pre-encoder in Embodiment 4 of the present invention;

FIG. 9 is a schematic diagram of a structure of a clipped error sample fragment in Embodiment 2 of the present invention; and

FIG. 10 is a schematic diagram of a transceiver serial number field described in Embodiments 2, 3, and 4 of the present invention.

**DETAILED DESCRIPTION OF THE EMBODIMENTS**

In order to solve the far-end crosstalk problem, generally a vectored-DSL technical solution is employed.

In the solution, a signal is received and sent in a combined manner, and a signal processing method is applied to reduce the far-end crosstalk. For a system having M mutually adjacent channels, a channel transmission matrix H of the system is an M×M matrix on each sub-carrier. It is assumed that x is an M×1 channel input vector, y is an M×1 channel output vector, and n is an M×1 noise vector. A channel transmission equation on each sub-carrier may be shown as:

$$y = Hx + n.$$

Far-end crosstalk between channels is manifested on an off-diagonal element in the matrix H. In order to eliminate the far-end crosstalk, the off-diagonal element are required to be turned into zeros through matrix operations.

For an uplink direction, that is, a CPE end sends a signal to a CO end. The CO end performs combined receiving processing on a received signal, that is, a crosstalk offset matrix W is introduced to the received signal to acquire $y_1$. When a result of matrix multiplication of the matrix W and the matrix H is a unit matrix, the far-end crosstalk may be eliminated.

$$y_1 = Wy = WHx + Wn$$

For a downlink direction, that is, the CO end sends a signal to the CPE end, the CO end performs combined sending processing on the sent signal, that is, a pre-encoding matrix P is introduced to the sent signal, so that $x_2 = Px$, and a channel output vector is $y_2$. A diagonal matrix is acquired by matrix multiplication of the matrix P and the matrix H, thereby eliminating the far-end crosstalk.

$$y_2 = Hx_2 + n = HPx + n$$

In a system using the vectored-DSL technology, a VCE (Vectoring Control Entity, vectoring control entity) performs an operation of signal vectorization, and calculates the offset matrix W and the pre-encoding matrix P. A specific calculation process of W and P is as follows. A signal sending end sends a pilot sequence (Pilot Sequence) to a signal receiving end on each channel simultaneously. The receiving end measures an error caused by far-end crosstalk of sending the pilot sequence, and combines error data into a clipped error sample (Clipped Error Sample). The receiving end sends the clipped error sample to a VCE. The VCE calculates the channel transmission matrix H, the offset matrix W, and the pre-encoding matrix P according to the pilot sequence and the clipped error sample. By introducing the offset matrix W and the pre-encoding matrix P, the vectored-DSL technology may reduce the far-end crosstalk.

The technical solution of the present invention is clearly and completely described in the following with reference to the accompanying drawings. It is obvious that the embodiments to be described are a part rather than all of the embodiments of the present invention. All other embodiments obtained by persons skilled in the art based on the embodiments of the present invention without creative efforts shall fall within the protection scope of the present invention.

**Embodiment 1**

The embodiment of the present invention provides a signal processing method of bonded DSL channels. As shown in FIG. 2, the method includes the following steps.

201: Send a pilot sequence to a receiving end through at least two bonded channels separately.

The pilot sequence shall be sent through each of the bonded channels simultaneously. 202: Receive clipped error sample fragments returned by the receiving end.

The pilot sequence transmitted through the channels incurs an error due to far-end crosstalk. After receiving the pilot sequence sent by a sending end, the receiving end combines the error of the pilot sequence caused by the far-end crosstalk into a clipped error sample. Then, the receiving end fragments the clipped error sample to acquire the clipped error sample fragments, and returns the clipped error sample fragments to the sending end.

203: Re-aggregate received clipped error sample fragments into a clipped error sample.

204: Calculate a pre-encoding coefficient according to the pilot sequence and the re-aggregated clipped error sample. The pre-encoding coefficient is used to perform pre-encoding processing on a signal before the signal is sent to the at least two bonded channels.

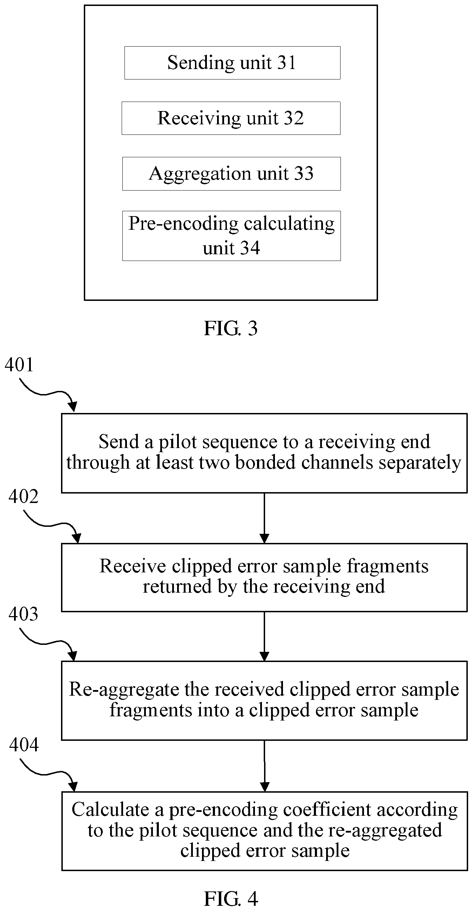

The embodiment of the present invention further provides a signal processing device of bonded DSL channels, as shown in FIG. 3. The device includes a sending unit 31, a receiving unit 32, an aggregation unit 33, and a pre-encoding calculating unit 34. The sending unit 31 is configured to send a pilot sequence to a receiving end through at least two bonded channels separately. The receiving unit 32 is configured to receive clipped error sample fragments returned by the receiving end. The aggregation unit 33 re-aggregates the received clipped error sample fragments into a clipped error sample. The pre-encoding calculating unit 34 is configured to calculate a pre-encoding coefficient according to the pilot sequence and the re-aggregated clipped error sample. Before a signal is sent to the at least two bonded channels, the sending end performs pre-encoding processing on the signal according to the pre-encoding coefficient.

The pre-encoding coefficient is the pre-encoding matrix P. The pre-encoding processing is performed, through the pre-encoding matrix P, on a signal sent by the sending end to the receiving end, so as to reduce the far-end crosstalk.

In the signal processing method and device of the bonded DSL channels provided by the embodiment of the present invention, the pre-encoding coefficient is introduced into the sending end of a Bonding-DSL system, and the pre-encoding processing is performed on the signal through the pre-encoding coefficient. When a CO end in the system transmits data to a CPE end in the system, the far-end crosstalk may be reduced, which thereby ensures communication steadiness of the bonded channels.

**Embodiment 2**

The embodiment of the present invention provides a processing method of bonded DSL channels. As shown in FIG. 4, the method includes the following steps.

401: Send a pilot sequence to a receiving end through at least two bonded channels separately.

The pilot sequence shall be sent through each of the bonded channels simultaneously.

402: Receive clipped error sample fragments returned by the receiving end.

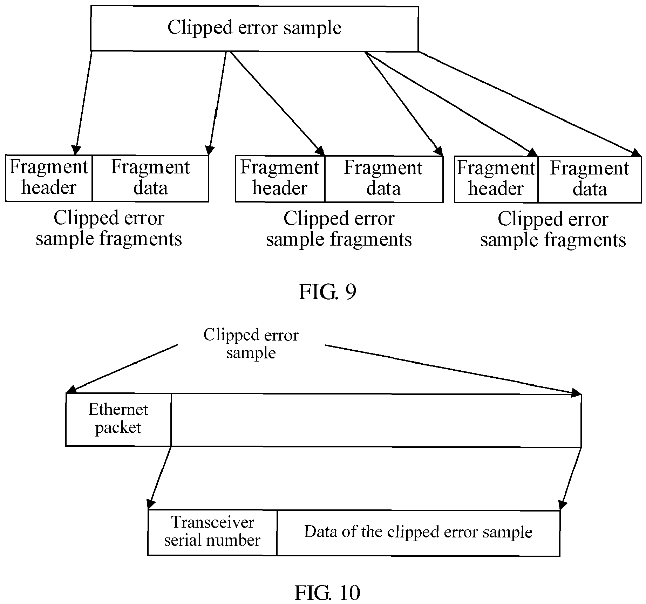

The pilot sequence transmitted through the channels incurs an error due to far-end crosstalk. After receiving the pilot sequence sent by a sending end and transferred through the channels, the receiving end combines the error of the pilot sequence caused by the far-end crosstalk into a clipped error sample, fragments the clipped error sample into the clipped error sample fragments, and returns the clipped error sample fragments to the sending end. The receiving end performs fragmentation operation on the clipped error sample according to a preset format. For example, each clipped error sample fragment may have a fragment header. The fragment header records a fragment serial number or a fragment sign, so that the sending end may identify and recombine the clipped error sample fragments. The clipped error sample fragment having the fragment header is as shown in FIG. 9. The receiving end generally divides the clipped error sample into at least two clipped error sample fragments. In an actual application, when the number of the clipped error sample is smaller than a preset threshold value, only one clipped error sample fragment having the fragment header may be generated. The one clipped error sample fragment carries all data of the clipped error sample, and has a fragment header.

When the receiving end returns the clipped error sample fragments to the sending end through the bonded channels, in order to ensure accuracy of the clipped error sample fragments, the receiving end shall select steady channels for transmission. In an actual application, a transceiver corresponding to a channel with a low count of error second (Error Second) or a low count of code violation (Code Violation) is generally selected to perform the sending. Meanwhile, when data traffic in

a channel of the bonded channels exceeds a preset threshold value, the channel of the data traffic exceeding the preset threshold value is congestion-marked. The receiving end does not perform the sending through the congestion-marked channel, and shall select a transceiver corresponding to a non-congested channel or a channel with lightest traffic to perform the sending.

403: Re-aggregate the received clipped error sample fragments into a clipped error sample.

The sending end restores a clipped error sample from the received clipped error sample fragments, and a restored clipped error sample has to be the same as a clipped error sample assembled by the receiving end. In order to ensure that a former clipped error sample and a latter clipped error sample are completely the same, the sending end performs the operation of re-aggregation on the clipped error sample fragments according to the preset format used by the receiving end. For example, each clipped error sample fragment may have a fragment header, the fragment header records a fragment serial number or a fragment sign, so that the sending end may identify and recombine the clipped error sample fragments. The clipped error sample fragment having the fragment header is as shown in FIG. 9. After receiving the clipped error sample fragments, the sending end arranges the clipped error sample fragments according to the fragment headers, and restores a complete clipped error sample from the clipped error sample fragments.

In addition, the clipped error sample fragments may be returned to the sending end through multiple channels or another channel different from the channel corresponding to the clipped error sample, so that a transceiver serial number field is required to be inserted when the receiving end constructs the clipped error sample, so as to identify the transceiver at the receiving end that constructs the clipped error sample where the transceiver serial number field is, thereby acquiring the transceiver at the sending end corresponding to the clipped error sample where the transceiver serial number field is. When the sending end re-aggregates the clipped error sample fragments, the transceiver corresponding to the re-aggregated clipped error sample and a corresponding channel may be determined according to the transceiver serial number field. FIG. 10 may serve as a reference for setting of a transceiver serial number in the clipped error sample. The clipped error sample in FIG. 10 is formed in the format of an Ethernet packet (definitely may also be formed in the format of an IP packet). According to a forming format of the Ethernet packet, an initial position is an Ethernet header, and the transceiver serial number is arranged to be behind the Ethernet header.

404: Calculate a pre-encoding coefficient according to the pilot sequence and the re-aggregated clipped error sample.

The sending end performs, through the pre-encoding coefficient, pre-encoding processing on a signal to be sent to the receiving end, so as to reduce the far-end crosstalk.

While returning the clipped error sample fragments to the sending end, the receiving end further returns a destination mark.

If the clipped error sample is formed in a format of an Ethernet packet of a data link layer, the destination mark is an MAC address, the re-aggregated clipped error sample is forwarded to the MAC address within the sending end through the data link layer, and then the operation of calculating the pre-encoding coefficient according to the clipped error sample is executed.

If the clipped error sample is formed in a format of an IP packet of a network layer, the destination mark is an IP address, the re-aggregated clipped error sample is forwarded to the IP address within the sending end through the network layer, and then the operation of calculating the pre-encoding coefficient according to the clipped error sample is executed.

In the signal processing method of bonded DSL channels provided by the embodiment of the present invention, the clipped error sample fragments are transferred in the bonded channels of a Bonding-DSL system, the pre-encoding coefficient is calculated according to the re-aggregated clipped error sample, and the pre-encoding coefficient is applied in the crosstalk elimination processing, so as to reduce the far-end crosstalk between the bonded channels when the sending end in the Bonding-DSL system sends a signal to the receiving end in the Bonding-DSL system, which thereby ensures steadiness and reliability of data transmission in the bonded channels.

**Embodiment 3**

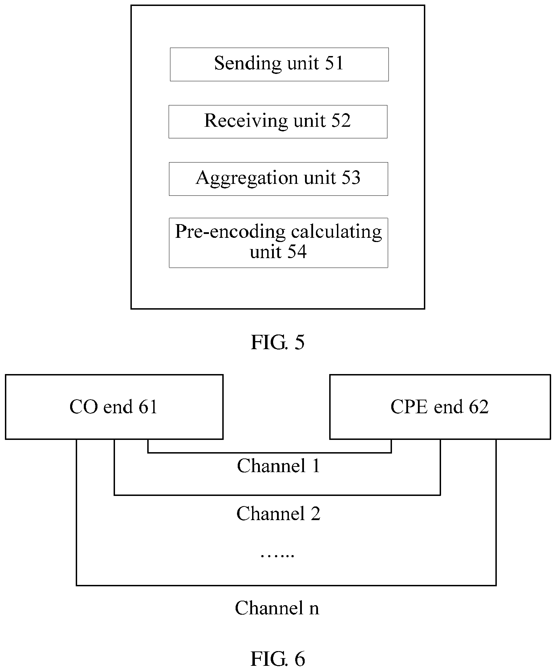

The embodiment of the present invention provides a signal processing device of bonded DSL channels, as shown in FIG. 5. The device includes a sending unit 51, a receiving unit 52, an aggregation unit 53, and a pre-encoding calculating unit 54.

The sending unit 51 is configured to send a pilot sequence to a receiving end through at least two bonded channels separately. The receiving unit 52 is configured to receive clipped error sample fragments returned by the receiving end. The aggregation unit 53 re-aggregates the received clipped error sample fragments into a clipped error sample. The pre-encoding calculating unit 54 is configured to calculate a pre-encoding coefficient according to the pilot sequence and the re-aggregated clipped error sample. Before a signal is sent to the at least two bonded channels, the sending end performs pre-encoding processing on the signal according to the pre-encoding coefficient.

The clipped error sample fragments received by the receiving unit 52 may be returned to the sending end through multiple channels or another channel different from the channel corresponding to the clipped error sample, so that a transceiver serial number field is required to be inserted when the receiving end constructs the clipped error sample, so as to identify the transceiver at the receiving end that constructs the clipped error sample where the transceiver serial number field is. When the aggregation unit 53 at the sending end re-aggregates the clipped error sample fragments, the transceiver corresponding to the re-aggregated clipped error sample and the corresponding channel may be determined according to the transceiver serial number field. FIG. 10 may serve as a reference for setting of a transceiver serial number in the clipped error sample. The clipped error sample in FIG. 10 is formed in the format of an Ethernet packet (definitely may also be formed in the format of an IP packet). According to the forming format of the Ethernet packet, an initial position is an Ethernet header, and the transceiver serial number is arranged to be behind the Ethernet header.

In addition, when the receiving end returns the clipped error sample fragments to the sending end through the bonded channels, in order to ensure accuracy of the clipped error sample fragments, the receiving end shall select steady channels for transmission. In an actual application, a transceiver corresponding to a channel with a low count of error second or a low count of code violation is generally selected to perform the sending. Meanwhile, when data traffic in a channel of the bonded channels exceeds a preset threshold value, the channel of the data traffic exceeding the preset threshold value is congestion-marked. The receiving end does not perform the sending through the congestion-marked channel, and shall select a transceiver corresponding to a non-congested channel or a channel with lightest traffic to perform the sending.

After receiving the pilot sequence sent by the sending unit 51, the receiving end combines the error of the pilot sequence caused by the far-end crosstalk into a clipped error sample, fragments the clipped error sample into the clipped error sample fragments, and returns the clipped error sample fragments to the receiving unit 52 at the sending end. While returning the clipped error sample fragments to the sending end, the receiving end further returns a destination mark. If the clipped error sample is formed in a format of an Ethernet packet of a data link layer, the destination mark is an MAC address, the re-aggregated clipped error sample is forwarded to the MAC address within the sending end through the data link layer, and then the operation of calculating the pre-encoding coefficient according to the clipped error sample is executed. If the clipped error sample is formed in a format of an IP packet of a network layer, the destination mark is an IP address, the re-aggregated clipped error sample is forwarded to the IP address within the sending end through the network layer, and then the operation of calculating the pre-encoding coefficient according to the clipped error sample is executed.

In the signal processing device of the bonded DSL channels provided by the embodiment of the present invention, the pre-encoding coefficient is introduced into the sending end of a Bonding-DSL system, and the pre-encoding processing is performed on the signal through the pre-encoding coefficient, so as to reduce the far-end crosstalk between the bonded channels when the sending end in the Bonding-DSL system sends a signal to the receiving end in the Bonding-DSL system, which thereby ensures communication steadiness of the bonded channels.

**Embodiment 4**

The embodiment of the present invention further provides a signal processing system of bonded DSL channels. As shown in FIG. 6, the system includes a CO end 61 and a CPE end 62.

The CO end 61 sends a pilot sequence to a CPE end 62 through at least two bonded channels separately. The pilot sequence is sent through each of the bonded channels simultaneously. Each channel of the bonded channels sends a pilot sequence. Each pilot sequence arriving at the CPE end 62 incurs an error due to far-end crosstalk of other channels. The CPE end 62 constructs a clipped error sample according to the received pilot sequence having the error.

The clipped error sample constructed by the CPE end is formed in a format of an Ethernet packet of a data link layer or an IP packet of a network layer. If the clipped error sample is an Ethernet packet, the clipped error sample is forwarded within the CPE end through the data link layer. If the clipped error sample is an IP packet, the clipped error sample is forwarded within the CPE end through the network layer

The CPE end 62 splits the generated clipped error sample into clipped error sample fragments, and sends the clipped error sample fragments to the CO end 61. The CPE end 62 performs fragmentation operation on the clipped error sample according to a preset format. Description of step 402 in Embodiment 2 may serve as a reference for a specific operation manner.

The CO end 61 receives, through channels connected thereto, the clipped error sample fragments sent by the CPE end 62, and re-aggregates all of the clipped error sample fragments to restore a complete clipped error sample. Description of step 403 in Embodiment 2 may server as a reference for a specific operation manner.

The CO end 61 calculates a pre-encoding coefficient according to the pilot sequence and the re-aggregated clipped error sample. The pre-encoding coefficient is used to perform pre-encoding processing on a signal before the signal is sent to the at least two bonded channels, so as to reduce the far-end crosstalk between the channels.

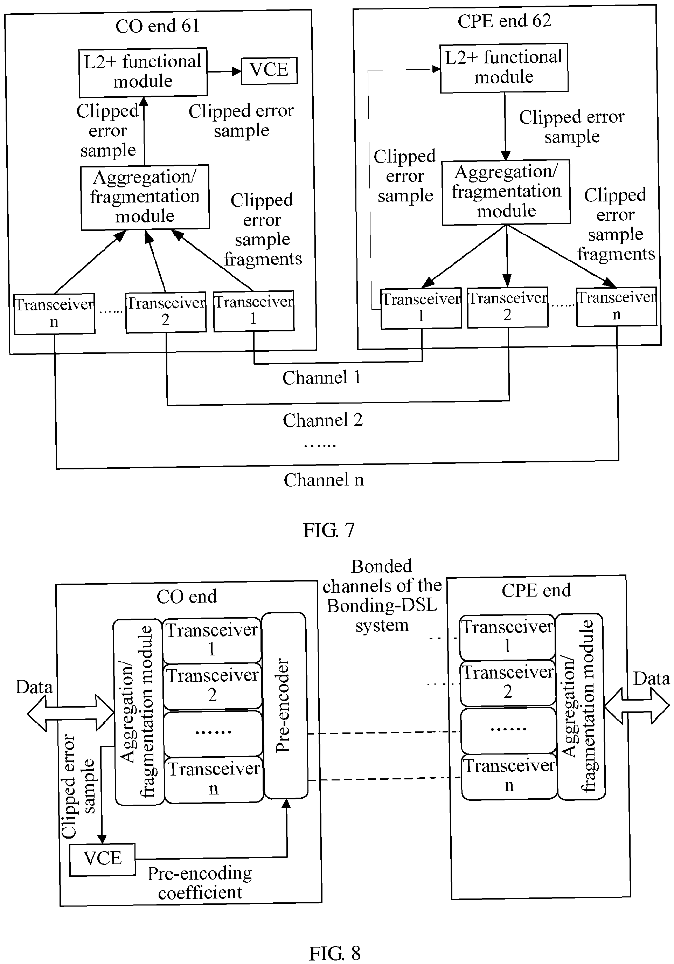

In an actual application, the system provided by the embodiment of the present invention may be formed according to the following manner (but not limited to the following manner), as shown in FIG. 7.

In FIG. 7, each transceiver at the CO end 61 is connected to each transceiver at the CPE end through bonded channels separately. The transceiver is used to send and receive data. Each transceiver at the CO end 61 simultaneously sends a pilot sequence to each transceivers at the CPE end 62 that are connected through the bonded channels. The pilot sequence arriving at the transceiver at the CPE end 62 incurs an error due to the far-end crosstalk. The transceiver at the CPE end 62 constructs the clipped error sample according to the received pilot sequence having the error. The CPE end forwards the clipped error sample to an aggregation/fragmentation module at the CPE end through an L2+ functional module at the CPE end. The L2+ functional module is configured to forward data link layer data or network layer data. The aggregation/fragmentation module is configured to perform aggregation or fragmentation operation on data. The clipped error sample constructed by the transceiver at the CPE end is formed in a manner of an Ethernet packet of the data link layer or an IP packet of the network layer.

The CPE end 62 splits the clipped error sample into at least two clipped error sample fragments through the aggregation/fragmentation module, and sends the clipped error sample fragments to the CO end 61. The aggregation/fragmentation module at the CPE end 62 performs fragmentation operation on the clipped error sample according to a preset format. Description of step 402 in Embodiment 2 may serve as a reference for a specific operation manner.

After the CPE end 62 in FIG. 7 generates the clipped error sample fragments, the clipped error sample fragments may be returned to the CO end through multiple channels or another channel different from the channel corresponding to the clipped error sample, so that a transceiver serial number field is required to be inserted into the clipped error sample to indicate the transceiver at the CPE end that constructs the clipped error sample where the transceiver serial number field is, thereby acquiring the transceiver at the CO end 61 corresponding to the clipped error sample where the transceiver serial number field is. When the CO end 61 re-aggregates the clipped error sample fragments, the transceiver corresponding to the re-aggregated clipped error sample and the corresponding channel may be determined according to the transceiver serial number field. FIG. 10 may serve as a reference for setting of a transceiver serial number in the clipped error sample. The clipped error sample in FIG. 10 is formed in the format of an Ethernet packet (definitely may also be formed in the format of an IP packet). According to the forming format of the Ethernet packet, an initial position is an Ethernet header, and the transceiver serial number is arranged to be behind the Ethernet header.

When the clipped error sample fragments are transmitted to the CO end 61 through the bonded channels, all of the transceivers at the CPE end 62 are available. In an actual application, in order to ensure accuracy of the clipped error sample fragments, a transceiver corresponding to a channel with a low count of error second or a low count of code violation shall be selected to perform the sending. Meanwhile, when data traffic in a channel of the bonded channels exceeds a preset threshold value, the channel of the data traffic exceeding the preset threshold value is congestion-marked. The receiving end does not perform the sending through the congestion-marked channel, and shall select a transceiver corresponding to a non-congested channel or a channel with lightest traffic to perform the sending.

Each transceiver at the CO end 61 in FIG. 7 receive, through channels connected thereto, the clipped error sample fragments sent by the CPE end 62, and send all of the clipped error sample fragments to the aggregation/fragmentation module at the CO end 61. The aggregation module restores a complete clipped error sample from the clipped error sample fragments, and description of step 403 in Embodiment 2 may server as a reference for a specific operation manner.

The clipped error sample restored by the aggregation/fragmentation module at the CO end and corresponding to each transceiver separately is forwarded by the L2+ functional module at the CO end 61 to a VCE at the CO end 61. The VCE is configured to calculate the pre-encoding coefficient according to the pilot sequence and the re-aggregated clipped error sample. While sending the clipped error sample fragments, the transceiver at the CPE end 62 further sends a destination mark to the CO end 61, and the destination mark is an address of the VCE at the CO end. Therefore, if the address is an MAC address, the L2+ functional module at the CO end forwards the re-aggregated clipped error sample to the VCE at the CO end through the data link layer; if the address is an IP address of the network layer, the L2+ functional module at the CO end forwards the re-aggregated clipped error sample to the VCE at the CO end through the network layer. The VCE constructs the pre-encoding coefficient according to the pilot sequence and the re-aggregated clipped error sample, and sends the pre-encoding coefficient to a pre-encoder at the CO end. The pre-encoder processes a signal sent by each transceiver according to the pre-encoding coefficient corresponding to the transceiver, so as to eliminate the far-end crosstalk between the bonded channels when the CO end transmits a signal to the CPE end. The VCE in the embodiment of the present invention is usually located in the CO end. Definitely, in an actual application the VCE may also be a separate device disposed outside the CO end.

In the embodiment of the present invention, in order to reduce the far-end crosstalk occurring on the bonded channels when the CO end sends data to the CPE end in a Bonding-DSL system, the VCE and the pre-encoder are required to be disposed at the CO end of the system. The Bonding-DSL system additionally equipped with the VCE and the pre-encoder is as shown in FIG. 8.

In the signal processing system of the bonded DSL channels provided by the embodiment of the present invention, the pre-encoding coefficient is introduced into the CO end of the Bonding-DSL system, and the pre-encoding processing is performed on the signal through the pre-encoding coefficient, so as to reduce the far-end crosstalk between the bonded channels when the CO end in the Bonding-DSL system sends a signal to the CPE end in the Bonding-DSL system, which thereby ensures communication steadiness of the bonded channels. Meanwhile channels are selected when transmitting the clipped error sample fragments, which thereby ensure steadiness and accuracy of transmission of the clipped error sample.

Through the above description of the implementation, it is clear to persons skilled in the art that the present invention may be accomplished through software plus necessary universal hardware or through hardware, but in many cases, the former implementation is preferred. Based on this understanding, substantially the above technical solutions of the present invention or the part that makes contributions to the prior art may be embodied in the format of a software product. The computer software product is stored in a readable storage medium such as a floppy disk, a hard disk, or an optical disk of a computer, and contains several instructions to instruct computer equipment (for example, a personal computer, a server, or network equipment) to perform the method described in the embodiments of the present invention.

Specific embodiments of the present invention are described, but the protection scope of the present invention is not limited to the embodiments. Any modification or replacement that may be easily figured out by persons skilled in the art within the technical scope disclosed by the present invention shall fall within the protection scope of the present invention. Therefore, the protection scope of the present invention is defined by the claims.

**Claims**

1. A signal processing method of bonded Digital Subscriber Line channels, comprising:

   sending a pilot sequence to a receiving end through at least two bonded channels separately;
   receiving, through at least two channels of the bonded channels, clipped error sample fragments returned by the receiving end separately, wherein the receiving end measures an error of a received signal, constructs a clipped error sample, and fragments the clipped error sample to acquire the clipped error sample fragments;
   re-aggregating the received clipped error sample fragments into a clipped error sample; and
   calculating a pre-encoding coefficient according to the pilot sequence and a re-aggregated clipped error sample, wherein the pre-encoding coefficient is used to perform pre-encoding processing on a signal before the signal is sent to the at least two channels.

2. The signal processing method of bonded Digital Subscriber Line channels according to claim 1, wherein while sending the clipped error sample fragments the receiving end sends a destination mark;
   if a forming format of a data packet of the clipped error sample is an Ethernet packet, the destination mark is an MAC address, and the clipped error sample is forwarded within a sending end/the receiving end through a data link layer; and
   if the forming format of the data packet of the clipped error sample is an IP packet, the destination mark is an IP address, and the clipped error sample is forwarded within the sending end/the receiving end through a network layer.

3. The signal processing method of bonded Digital Subscriber Line channels according to claim 1, wherein the clipped error sample constructed by the receiving end comprises a transceiver serial number field for identifying a transceiver, which is at the receiving end and constructs the clipped error sample constructed by the receiving end.

4. The signal processing method of bonded Digital Subscriber Line channels according to claim 1, wherein the receiving end selects a steady channel to return the clipped error sample fragments, and the steady channel is acquired by performing performance statistics or congestion marking on the transceiver of the receiving end.

5. A signal processing device of bonded Digital Subscriber Line channels, comprising:

   a sending unit, configured to send a pilot sequence to a receiving end through at least two bonded channels separately;
   a receiving unit, receiving, through at least two channels of the bonded channels, clipped error sample fragments returned by the receiving end separately, wherein the receiving end measures an error of a received signal, constructs a clipped error sample, and fragments the clipped error sample to acquire the clipped error sample fragments;
   an aggregation unit, re-aggregating received clipped error sample fragments into a clipped error sample; and
   a pre-encoding calculating unit, configured to calculate a pre-encoding coefficient according to the pilot sequence and the re-aggregated clipped error sample, wherein the pre-encoding coefficient is used to perform pre-encoding processing on a signal before the signal is sent to the at least two channels.

**6.** The signal processing device of bonded Digital Subscriber Line channels according to claim 5, wherein while sending the clipped error sample fragments the receiving end sends a destination mark; if a forming format of a data packet of the clipped error sample is an Ethernet packet, the destination mark is an MAC address, and the clipped error sample is forwarded within a sending end/the receiving end through a data link layer; and if the forming format of the data packet of the clipped error sample is an IP packet, the destination mark is an IP address, and the clipped error sample is forwarded within the sending end/the receiving end through a network layer.

**7.** The signal processing device of bonded Digital Subscriber Line channels according to claim 5, wherein the clipped error sample constructed by the receiving end comprises a transceiver serial number field for identifying a transceiver, which is at the receiving end and constructs the clipped error sample constructed by the receiving end.

**8.** The signal processing device of bonded Digital Subscriber Line channels according to claim 5, wherein the receiving end selects a steady channel to return the clipped error sample fragments, and the steady channel is acquired by performing performance statistics or congestion marking on the transceiver of the receiving end.

**9.** A signal processing system of bonded Digital Subscriber Line channels, comprising:

a central office, configured to send a pilot sequence to a customer premises equipment through at least two bonded channels separately; and
the customer premises equipment, configured to construct a clipped error sample according to an error of a signal received from the at least two channels, fragment the clipped error sample to acquire clipped error sample fragments, and return the clipped error sample fragments to the central office through the at least two channels; wherein
the central office is further configured to receive, through at least two channels of the bonded channels, the clipped error sample fragments returned by the customer premises equipment separately, and re-aggregate the clipped error sample fragments into a clipped error sample; and
the central office is further configured to calculate a pre-encoding coefficient according to the pilot sequence and the re-aggregated clipped error sample, wherein the pre-encoding coefficient is used to perform pre-encoding processing on a signal before the signal is sent to the at least two channels.

**10.** The signal processing system of bonded Digital Subscriber Line channels according to claim 9, wherein while sending the clipped error sample fragments to the central office, the customer premises equipment sends a destination mark to the central office; if a forming format of a data packet of the clipped error sample is an Ethernet packet, the destination mark is an MAC address, and the clipped error sample is forwarded within the central office/ customer premises equipment through a data link layer; and if the forming format of the data packet of the clipped error sample is an IP packet, the destination mark is an IP address, and the clipped error sample is forwarded within the central office/ customer premises equipment through a network layer.

**11.** The signal processing system of bonded Digital Subscriber Line channels according to claim 9, wherein the clipped error sample constructed by the customer premises equipment comprises a transceiver serial number field for identifying a transceiver of the customer premises equipment which constructs the constructed clipped error sample.

**12.** The signal processing system of bonded Digital Subscriber Line channels according to claim 9, wherein the customer premises equipment selects a steady channel to return the clipped error sample fragments, and the steady channel is acquired by performing performance statistics or congestion marking on the transceiver of the customer premises equipment.

CO end — Bonded channels of the Bonding-DSL system — CPE end

Data — Aggregation/fragmentation module — Transceiver 1 / Transceiver 2 / ...... / Transceiver n — Transceiver 1 / Transceiver 2 / ...... / Transceiver n — Aggregation/fragmentation module — Data

FIG. 1

201

Send a pilot sequence to a receiving end through at least two bonded channels separately

202

Receive clipped error sample fragments returned by the receiving end

203

Re-aggregate the received clipped error sample fragments into a clipped error sample

204

Calculate a pre-encoding coefficient according to the pilot sequence and the re-aggregated clipped error sample

FIG. 2

Sending unit 31

Receiving unit 32

Aggregation unit 33

Pre-encoding calculating
unit 34

FIG. 3

401

Send a pilot sequence to a receiving end
through at least two bonded channels separately

402

Receive clipped error sample fragments
returned by the receiving end

403

Re-aggregate the received clipped error sample
fragments into a clipped error sample

404

Calculate a pre-encoding coefficient according
to the pilot sequence and the re-aggregated
clipped error sample

FIG. 4

Sending unit 51

Receiving unit 52

Aggregation unit 53

Pre-encoding calculating
unit 54

FIG. 5

CO end 61

CPE end 62

Channel 1

Channel 2

…...

Channel n

FIG. 6

FIG. 7

FIG. 8

Clipped error sample

| Fragment header | Fragment data | | Fragment header | Fragment data | | Fragment header | Fragment data |

Clipped error sample fragments     Clipped error sample fragments     Clipped error sample fragments

FIG. 9

Clipped error sample

| Ethernet packet | |

| Transceiver serial number | Data of the clipped error sample |

FIG. 10